# Europäisches Patentamt

# European Patent Office

# Office européen des brevets

(11) Publication number: **0 128 878**
**B1**

## (12) EUROPEAN PATENT SPECIFICATION

(45) Date of publication of patent specification: **29.07.87**

(51) Int. Cl.⁴: **B 60 K 11/04**

(21) Application number: **84830163.6**

(22) Date of filing: **28.05.84**

(54) **Device for anchoring a transverse radiation cowling or grille to the front part of the bodywork of a motor vehicle.**

(30) Priority: **10.06.83 IT 5345583 u**

(43) Date of publication of application:
**19.12.84 Bulletin 84/51**

(45) Publication of the grant of the patent:
**29.07.87 Bulletin 87/31**

(84) Designated Contracting States:
**DE FR GB**

(56) References cited:
**WO-A-82/00808**
**DE-A-2 018 459**
**FR-A-1 600 374**
**US-A-3 938 587**

(73) Proprietor: **FIAT AUTO S.p.A.**
**Corso Giovanni Agnelli 200**
**I-10135 Torino (IT)**

(72) Inventor: **Bellino, Paolo**
**Via Castel Gomberto 32**
**I-10136 Torino (IT)**
Inventor: **Giraudo, Giampiero**
**Via San Giacomo 39/A**
**I-10092 Fornaci di Beinasco (Torino) (IT)**

(74) Representative: **Buzzi, Franco et al**
**c/o Jacobacci-Casetta & Perani S.p.A. Via Alfieri, 17**
**I-10121 Torino (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a transverse radiator cowling or grille mounted on the front part of the bodywork of motor vehicles.

Conventionally such grilles, which may have the function of protecting and ventilating the radiator for the coolant liquid of the engine or simply an aesthetic and ornamental function, are connected to the front part of the vehicle bodywork at their ends, and generally by means of screw retaining members of the like.

This type of connection has in many cases been found to be unsatisfactory particularly in the case of grilles or cowlings of considerable length because of the vibrations which occur, which may give rise to annoying noises and premature fracture in the zones of connection of the grille or cowling to the vehicle bodywork.

It would therefore be desirable to provide supplementary anchoring means adapted to fasten the intermediate part of the grille or cowling to the bodywork, in order to prevent the occurrence of vibrations thereof. Such fastening means should be of the snap-in type, so as to expedite assembling operations.

WO—A—8200 808 discloses fixing of service apparatuses to the front part of a car body by means of snap-in fastening means, including hook teeth provided on the front part of the body and complementary hook teeth provided on the apparatuses to be fixed and adapted to snap-engage the said hook teeth of the body.

According to the above-mentioned document, the hook teeth of the car body are constituted by step projections or by recesses integrally formed within the body supporting structure.

This solution has the disadvantage of involving a non negligible complication in the manufacture of the body supporting structure. Moreover, the mentioned conformation of the hook teeth of the body does not ensure the necessary steadyness of connection which is instead required for effectively preventing vibrations of the element snap-connected to the car body, particularly in the case of long and flexible grilles or cowlings.

The object of the present invention is to avoid the above disadvantages by providing a supplementary anchoring device which on one hand does involve no particular complication in the vehicle body structure manufacture, and on the other hand effectively prevents the occurrence of vibrations of the grille or cowling.

In order to achieve this object, the present invention provides a device for anchoring a transverse radiator cowling or grille to the front part of the bodywork of a motor vehicle, comprising at least one hook tooth provided on the front part of the bodywork, and at least one complementary hook tooth provided on the cowling or grille and adapted to snap-engage the said hook tooth on the front part of the bodywork, characterized in that the hook tooth of the bodywork is defined by a substantially horizontal resilient lug carried by a hook member distinct from the bodywork and attached to the front part thereof, the said hook member forming a bearing and reaction surface opposite to the said resilient lug and spaced apart therefrom, and in that the complementary hook tooth is formed on a tab projecting from one side of the grille in a position spaced from the ends thereof and adapted, when the complementary hook tooth snap-engages the hook tooth of the hook member, to rest and react on the said bearing and reaction surface.

In practice the anchoring device according to the invention forms at least one supplementary connection between the grille or cowling and the front of the vehicle in a zone intermediate the normal end fixing zones. This to advantage allows the onset of vibrations to be avoided even in grilles or cowlings of considerable length and with relatively flexible structures.

According to the invention, the hook member has a tubular attachment projection arranged to engage a hole formed in the front part of the bodywork and to receive an axial locking pin of the attachment projection which is a force-fit in the said hole.

Thus the fitting of the hook member during assembly may be effected extremely simply and rapidly without recourse to conventional fixing systems such as, for example, screws, glueing or the like.

Preferably the device includes two hook members which are spaced apart and arranged to receive two corresponding tabs of the grille or cowling.

Further characteristics and advantages of the invention will become clear in the course of the detailed description which follows, with reference to the appended drawings, provided purely by way of non-limiting example, in which:

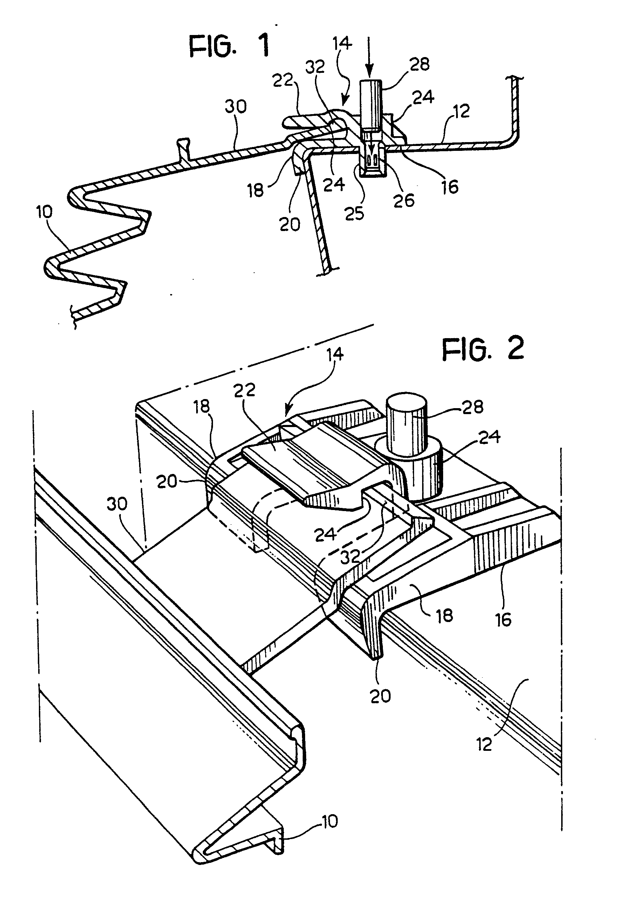

Figure 1 is a schematic longitudinal sectional view illustrating a front cowling or grille mounted on the bodywork of the vehicle by means of an anchoring device according to the invention, and Figure 2 is a perspective view of Figure 1.

In the drawings, a transverse radiator cowling or grille of undulatory profile is indicated 10 and is connected at its ends to the front part 12 of the bodywork of a motor vehicle by conventional systems, such as, for example, screws or like members not illustrated in the drawings.

According to the invention, the grille 10 is also connected to the front part 12 by means of a supplementary anchoring device having the main function of avoiding vibrations arising in the grille itself.

The anchoring system according to the invention includes a pair of hook members 14 which are spaced from each other and from the ends of the grille 10. Only one of these hook members 14 is illustrated in the drawings since the other is entirely identical.

Each hook member 14 is constituted by a body of moulded plastics material including a substantially horizontal base 16 the front which has a pair of spaced apart arms 18 with their free ends 20 bent. The base 16 and the arms 18 with their bent ends 20 rest on the front part 12 of the bodywork of the vehicle in the manner illustrated in drawings.

Between the two arms 18 there extends, at a level above these arms a substantially horizontal resilient lug 22 forming on its lower face a hook tooth 24 which faces rearwardly of the vehicle.

Behind the resilient lug 22, the base 16 has a tubular attachment part 24 with its axis substantially vertical which is extended by a tubular lug 25 beneath the base 16, passing through a corresponding hole 26 formed in the front part of the bodywork 12.

The fixing of each hook member 14 to the front part of the bodywork 12 is achieved by means of a simple pin 28 which is introduced axially into the tubular part 24 and forced into the lug 25 in the manner illustrated in Figure 1, so as to prevent its extraction from the hole 26.

Each hook member 14 is associated with a tab 30 projecting rearwardly from the upper side of the grille 10 and defining at its free end a hook tooth 32 facing towards the grille 10 and arranged to engage the hook tooth 24 of the respective hook member 14 in the manner illustrated. This engagement is achieved simply by inserting the tab 30 between the arms 18 and the resilient lug 22 until the teeth 24 and 32 snap engage.

In the hooked condition the tabs 30 are firmly locked by the respective hook members 14 between the upper faces of the respective arms 18 and the resilient lugs 22 effectively protecting any vibration of the grille 10.

It should be noted that the tabs 30 may be fixed to the grille 10 by any conventional means or, when the grille 10 is of moulded plastics material as in the example illustrated, they may be formed directly by moulding with the grille itself.

## Claims

1. Device for anchoring a transverse radiator cowling or grille (10) to the front part of the bodywork (12) of a motor vehicle, comprising at least one hook tooth (32) provided on the front part of the bodywork, and at least one complementary hook tooth provided on the cowling or grille and adapted to snap-engage the said hook tooth on the front part of the bodywork, characterized in that the hook tooth (24) of the bodywork (12) is defined by a substantially horizontal resilient lug (22) carried by a hook member (14) distinct from the bodywork (12) and attached to the front part thereof, the said hook member (14) forming a bearing and reaction surface (18) opposite to the said resilient lug (22) and spaced apart therefrom, and in that the complementary hook tooth (32) is formed on a tab (30) projecting from one side of the grille (10) in a position spaced from the ends thereof and adapted, when the complementary hook tooth (32) snap-engages the hook tooth (24) of the hook member (14), to rest and react on the said bearing and reaction surface (18).

2. Device according to Claim 1, characterized in that the hook member (14) has a tubular attachment projection (25) for engaging a hole (26) formed in the front part (12) of the bodywork of the vehicle and adapted to receive an axial locking pin (28) of the attachment projection (25) which is a force-fit in the said hole (26).

3. Device according to Claim 1 or Claim 2, characterized in that the bearing and reaction surface is defined by a pair of arms (18) located on opposite sides of the resilient lug (22) and having ends (20) bent so as to engage the front part (12) of the vehicle bodywork.

4. Device according to any one of the preceding claims, characterized in that it includes a pair of spaced apart hook members (14) and a pair of corresponding tabs (30) carried by the grille (10).

5. Device according to one or more of the preceding claims, characterised in that the or each hook member (14) is formed by a body of moulded plastics material.

6. Device according to one or more of the preceding claims, in which the radiator cowling or grille is of moulded plastics material, characterised in that the or each tab (30) is formed integrally by moulding with the grille (10).

## Patentansprüche

1. Vorrichtung zur Befestigung einer querliegenden Kühlerabdeckung oder eines Kühlergrills (10) an dem vorderen Teil einer Kraftfahrzeugkarosserie (12)

mit wenigstens einem an dem vorderen Teil der Fahrzeugkarosserie (12) vorgesehenen Verhakungszahn (24) und wenigstens einem komplementären Verhakungszahn, der an der Kühlerabdeckung bzw. dem Kühlergrill (10) angebracht und für einen Schnappeingriff mit dem Verhakungszahn der Fahrzeugkarosserie ausgebildet ist,

dadurch gekennzeichnet,

daß der Verhakungszahn (24) an der Fahrzeugkarosserie (12) von einem im wesentlichen horizontalen elastischen Lappen (22) bestimmt ist, der von einem von der Fahrzeugkarosserie (12) getrennten und an deren vorderem Teil befestigten Hakenelement (14) getragen ist, wobei dieses Hadenelement (14) auf der dem elastischen Lappen (22) entgegengesetzten Seite und im Abstand von dem Lappen (22) eine Stütz- und Reaktionsfläche (18) bildet,

und daß der komplementäre Verhakungszahn (32) an einem Ansatz (30) ausgebildet ist, der von einer Seite der Kühler abdeckung bzw. des Kühlergrills (10) in einer im Abstand von deren bzw. dessen Endbereichen liegenden Position hervorsteht und derart ausgebildet ist, daß er auf der genannten Stütz- und Reakionsfläche (18) ruht und auf sie eine Gegenkraft ausübt, wenn der komplementäre Verhakungszahn (32) sich in Schnappeingriff mit dem Verhakungszahn (24) des Hakenelements (14) befindet.

2. Vorrichtung nach Anspruch 1, dadurch gekennzeichnet, daß das Hakenelement (14) einen rohrförmigen Befestigungsansatz (25) für den Eingriff mit einer in dem vorderen Teil der Fahrzeugkarosserie (12) vorgesehenen Öffnung (26) besitzt, in der ein axialer Stift (28) zur Blockierung des Befestigungsansatzes (25) aufgenommen werden kann, der in der Öffnung (26) einen Preßsitz bildet.

3. Vorrichtung nach Anspruch 1 oder 2, dadurch gekennzeichnet, daß die Stütz- und Reaktionsfläche (18) von zwei Armen (18) bestimmt ist, die an entgegengesetzten Seiten des elastischen Lappens (22) ausgebildet und deren Enden (20) derart abgebogen sind, daß sie mit dem vorderen Teil der Fahrzeugkarosserie (12) in Eingriff stehen.

4. Vorrichtung nach einem der vorhergehenden Ansprüche, dadurch gekennzeichnet, daß zwei im Abstand angeordnete Hakenelemente (14) und zwei korrespondierende, von der Kühlerabdekkung bzw. dem Kühlergrill (10) getragene Ansätze (30) vorgesehen sind.

5. Vorrichtung nach einem oder mehreren der vorhergehenden Ansprüche, dadurch gekennzeichnet, daß jedes Hakenelement (14) von einem Kunststoff-Formkörper gebildet ist.

6. Vorrichtung nach einem oder mehreren der vorhergehenden Ansprüche, bei der die Kühlerabdeckung bzw. der Kühlergrill ein Kunststoff-Formteil ist, dadurch gekennzeichnet, daß der bzw. jeder Ansatz (3) einstücking an der Kühlerabdeckung bzw. dem Kühlergrill angeformt ist.

**Revendications**

1. Dispositif de fixation de calandre ou grille de radiateur transversale (10) à la partie avant de la carrosserie (12) d'un véhicule automobile, comportant au moins une dent de crochet (32) prévue sur la partie avant de la carrosserie, et au moins une dent de crochet complémentaire prévue sur la calandre ou grille et adaptée pour se conjuguer, par enclenchement, à ladite dent de crochet sur la partie avant de la carrosserie, caractérisé en ce que la dent de crochet (24) de la carrosserie (12) est définie par une patte d'attache (22), élastique et sensiblement horizontale, portée par un élémentcrochet (14) distinct de la carrosserie (12) et fixé à la partie avant de celle-ci, ledit élément-crochet (14) formant une surface d'appui et de réaction (18) tournée vers ladite patte d'attache élastique (22) dont elle est séparée par un espace, et en ce que la dent de crochet complémentaire (32) est formée sur une patte (30) formant saillie depuis un côté de la grille (10), en un endroit écarf des extrémités de celle-ci, et adaptée pour s'appliquer et exercer une réaction sur ladite surface d'appui et de réaction (18) lorsque la dent de crochet complémentaire (32) se conjugue, par enclenchement, à la dent de crochet (24) de l'élément-crochet (14).

2. Dispositif selon la revendication 1, caractérisé en ce que l'élément-crochet (14) possède un saillant de fixation (25) qui est tubulaire et est destiné à être engagé dans un trou (26) formé dans la partie avant (12) de la carrosserie du véhicule et adapté pour recevoir une broche de verrouillage axial (28) du saillant de fixation (25), laquelle eat rentrée à force dans ledit trou (26).

3. Dispositif selon la revendication 1 ou la revendication 2, caractérise en ce que la surface d'appui et de réaction est définie par une paire de bras (18) situés sur des côtés opposés de la patte d'attache élastique (22) et dotés d'extrémités (20) coudées de manière à rencontrer la partie avant (12) de la carrosserie du véhicule.

4. Dispositif selon l'une quelconque des revendications précédentes, caractérisé en ce qu'il comporte une paire d'élémentscrochets (14) mutuellement espacés et une paire de pattes correspondantes (30) portées par la grille (10).

5. Dispositif selon une ou plusieurs des revendications précédentes, caractérisé en ce que l'élément-crochet (14), ou chaque élément-crochet, est formé par un corps en matière plastique moulée.

6. Dispositif selon une ou plusieurs des revendications précédentes, dans lequel la calandre ou grille de radiateur est en matière plastique moulée, caractérisé en ce que la patte (30), ou chaque patte, est formée d'un seul tenant avec la grille (10), par moulage.

FIG. 1

FIG. 2